# EUROPEAN PATENT APPLICATION

(11) **EP 2 028 778 A1**
(43) Date of publication of application: **25.02.2009**
(21) Application number: 07291033.4
(22) Date of filing: 22.08.2007
(51) Int. Cl.: H04J 14/02

(54) **Optical add-drop multiplexer**

(71) Applicant: Alcatel Lucent, 75008 Paris (FR)
(72) Inventor: Speciale, Massimo, 16163 Genova (IT); Perasso, Aldo, 16145 Genova (IT)
(74) Representative: Menzietti, Domenico

(57) **Abstract**

A network element is disclosed including switching means, the switching means including a plurality of inputs for receiving a first plurality of optical signals and including a plurality of outputs for generating a second plurality of optical signals. The network element further includes a variable optical attenuator including an input connected to an output out of the plurality of switching means outputs for receiving a first optical signal out of the second plurality of optical signals; the variable optical attenuator includes an output for generating a second optical signal. An input out of the plurality of switching means inputs is connected to the switching means output. The network element further includes monitoring means adapted to detect the power level of the first optical signal at the variable optical attenuator input connected to the switching means output or to detect the power level of the second optical signal at the variable optical attenuator output and, in case the detected power level is smaller than a working value, the monitoring means are adapted to control therefrom the variable optical attenuator in order to set the power level of the second optical signal to a non-working value.

## Description

### FIELD OF THE INVENTION

The present invention relates to the telecommunication field and more in particular to an Optical Add-Drop Multiplexer. Still more in particular, the invention concerns an Optical Add-Drop Multiplexer for metropolitan telecommunications networks.

### BACKGROUND OF THE INVENTION

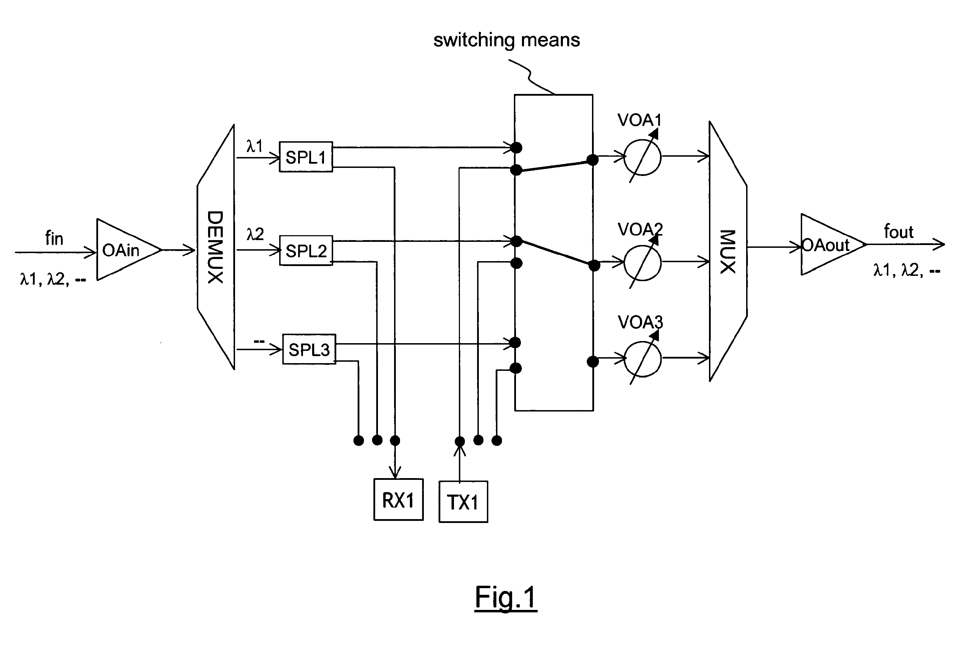

Referring to Fig.1, it shows a known Optical Add-Drop Multiplexer (indicated herein after with OADM), including:
- an input optical fibre (fin) carrying an optical signal according to Wavelength Division Multiplexing (WDM). Fig.1 shows a WDM optical signal carrying two wavelengths (λ1, λ2), while a third wavelength λ3 is available over the input optical fibre, but it's not used (this is shown with "--" over the input optical fibre), that is it's not carrying user information. Fig.1 shows an input optical fibre able to carry three wavelengths, but any number of wavelenghts can be carried;
- an input optical amplifier (OAin) to amplify the received optical signal;
- a demultiplexer (DEMUX) for demultiplexing the amplified optical signal to a plurality of demultiplexer outputs. In this example the amplified optical signal carries wavelenghts λ1 and λ2: λ1 is demultiplexed over a first demultiplexer output and λ2 is demultiplexed over a second demultiplexer output (while λ3 is unused and this is shown again with "--" over the third demultiplexer output). In case the input optical fibre is also carrying wavelength λ3, λ3 is demultiplexed over a third demultiplexer output;
- a drop port (RX1) for dropping locally an optical signal carried over a wavelength (in this example, the dropped wavelength is λ1) and an add port (TX1) for adding locally another optical signal over the same wavelength. Fig.1 shows one add/drop port, but the OADM can include any number of add/ drop ports and thus any number of wavelengths can be added/dropped locally;
- a plurality of splitters (SPL1, SPL2, SPL3), each splitter including an input connected to a demultiplexer output and including two outputs. Each splitter is adapted to split the input optical signal to the two outputs, wherein a first output is connected to a local drop port and a second output is connected to a switching means input;
- switching means including a plurality of inputs connected to the splitters outputs and to the add ports and including a plurality of outputs. The switching means are adapted to switch the optical signals received from the splitters outputs and from add ports to the plurality of switching means outputs;
- a plurality of variable optical attenuators (VOA1, VOA2, VOA3), each VOA including an input connected to a switching means output and including one output. Each VOA is adapted to generate, from the input optical signal, to the VOA output an optical signal and to set the power level of the generated optical signal to a pre-defined value (for example, -3 dBm);
- a multiplexer (MUX) including a plurality of multiplexer inputs, each multiplexer input being connected to a VOA output. The multiplexer is adapted to multiplex the optical signals received from the VOA outputs to a multiplexer output. In this example, the multiplexer includes three inputs, wherein the first input is carrying wavelenght λ1 and the second input is carrying wavelenght λ2 (and the third input is adapted to carry the third wavelenght λ3, in case the input optical fibre is also carrying wavelength λ3 or in case λ3 is added locally by an add port), which are multiplexed according to WDM to an optical signal carried over the multiplexer output;
- an output optical amplifier (OAout) to amplify the optical signal received from the multiplexer output;
- an output optical fibre (fout) for carrying the optical signal received from the output optical amplifier.

An optical telecommunication network includes a plurality of OADMs connected each other. During the deployment of the network, it's necessary to configure the wavelengths carried in the network and also after the deployment of the network it's necessary to modify the configured wavelenghts.

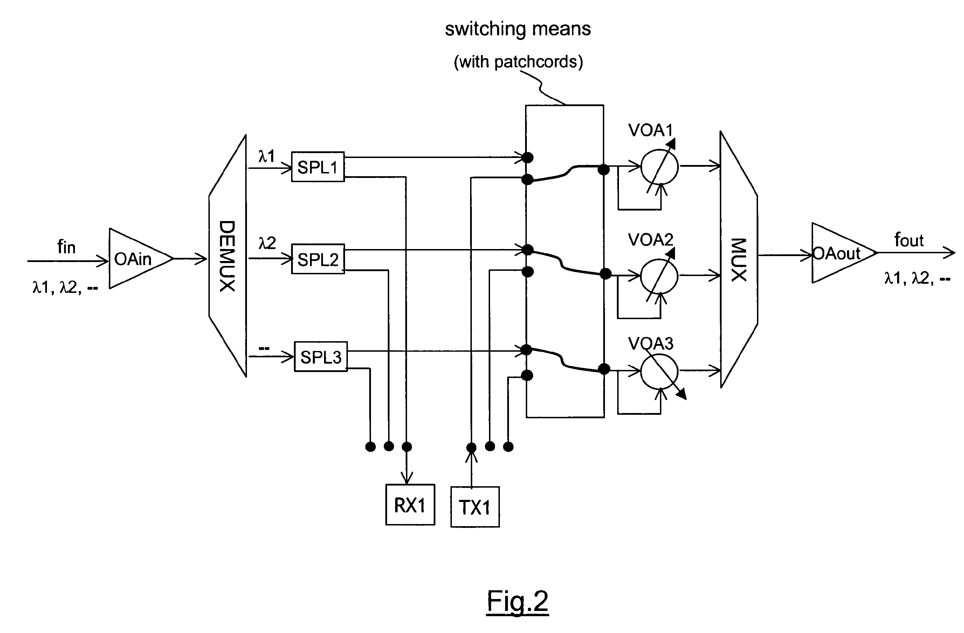

For example, five OADMs are connected in a ring topology including OADM1, OADM2, OADM3, OADM4, OADM5 and the ring network is able to carry 3 wavelengths λ1, λ2, λ3 according to WDM. A first connection is carrying user information over λ1 in the ring network and a second connection is carrying other user information over λ2 in the ring network (it is supposed that the wavelenght allocation is not changed along the connection in the ring network) and these connections are configured in the ring network crossing OADM1, OADM2 and OADM3, requiring the configuration of the switching means into OADM1, OADM2, OADM3. Specifically:
- λ1 is added into OADM1 through an add port, the add port is connected to a first input of the OADM1 switching means and the first input of the OADM1 switching means is connected to a first output of the OADM1 switching means (like shown in Fig.1 for add port TX1 adding λ1);
- a first input (carrying λ1) of the OADM2 switching means is connected to a first output of the OADM2 switching means (like shown in Fig.2 for λ2, which is cross-connected from a switching means input to the second switching means output, wherein the switching means input is connected to the second splitter); and
- λ1 is dropped from OADM3 through a drop port (like shown in Fig.1 for drop port RX1 dropping λ1).

Similar considerations apply to the second connection carryed over λ2.

According to this example, wavelength λ3 is not carrying any network connection: in this case, the third output of the OADM2 switching means is not connected to any input of the OADM2 switching means (like shown in Fig.1 for the third switching means output connected to variable optical attenuator VOA3), that is the cross-connection between an input and the output corresponding to the unused wavelength λ3 is not configured.

In this example each of the two network connections includes only one intermediate network element (OADM2), but in general a network connection includes more intermediate network elements, like a metropolitan ring network composed of 6-12 network elements: in case of adding, after the deployment of the network, a network connection over wavelength λ3, it's necessary to connect the input to the output corresponding to the wavelenght λ3 of the switching means of all the intermediate network elements.

The switching means can be implemented through an optical switching matrix, wherein the switching can be performed only at the optical layer or can be performed at the electrical level, by converting the optical signals into electrical signals, performing the switching of the electrical signals and converting the switched electrical signals into optical signals.

An optical switching matrix has the advantage that it can be configured remotely, that is it can be controlled by a network operator through a central network management application. Therefore it's not necessary that the network operator is connected locally to the OADM for the configuration of the optical switching matrix in case of adding a new network connection over a new wavelenght. Anyway, an optical switching matrix has the disadvantage that it's expensive, expecially for a metropolitan network, wherein the cost reduction is an important aspect.

An OADM including a reconfigurable optical switching matrix is indicated with Reconfigurable OADM (ROADM).

The switching means can also be implemented through optical fibres patchcords, which are less expensive than an optical switching matrix, but which require complex configuration. In fact, the patchcords can't be configured remotely, but, in case of adding new network connections over new wavelenghts after the deployment of the network, they must be configured manually by the network operator, who has to visit all the intermediate OADMs of a network connection and the intermediate OADMs can also be located far each other. Therefore in this case the configuration is expensive and requires a lot of time and effort from the network operator. Moreover, during the configuration there is also the possibility to damage the patchcords and the optical connectors connected to the patchcords.

### SUMMARY OF THE INVENTION

In view of the drawbacks of the known solutions, the main object of the present invention is to provide an OADM which is cheap and which can be configured with a minimum operational cost and effort. This object is achieved by a network element according to claim 1.

The basic idea is to configure the switching means of each network element during the deployment of the telecommunication network or during the manufacturing of the network element and to control the Variable Optical Attenuator not only in presence of an optical signal carrying user information, but also when the optical signal is not carrying any user information and it's carrying only optical noise.

A further object of the invention is to provide a network element able to automatically detect the configuration of a new connection over a wavelength; this is achieved by a network element according to claim 2.

The invention has the advantages to provide a cheap network element and at the same time to reduce the operational costs and effort.

According to a first aspect, the present invention provides a network element including switching means, the switching means including a plurality of inputs for receiving a first plurality of optical signals and including a plurality of outputs for generating a second plurality of optical signals. The network element further includes a variable optical attenuator including an input connected to an output out of the plurality of switching means outputs for receiving a first optical signal out of the second plurality of optical signals; the variable optical attenuator includes an output for generating a second optical signal. An input out of the plurality of switching means inputs is connected to the switching means output. The network element further includes monitoring means adapted to detect the power level of the first optical signal at the variable optical attenuator input connected to the switching means output or to detect the power level of the second optical signal at the variable optical attenuator output and, in case the detected power level is smaller than a working value, the monitoring means are adapted to control therefrom the variable optical attenuator in order to set the power level of the second optical signal to a non-working value.

Preferably, in case the detected power level is greater or equal to the working value, the monitoring means are further adapted to control therefrom the variable optical attenuator in order to set the power level of the second optical signal to a pre-defined value.

Preferably, the switching means input is connected in pass-through mode with the switching means output.

Preferably, the switching means are optical fibre patchcords. Preferably, the switching means are an optical switching matrix.

Preferably, the non-working value is substantially a maximum attenuation value set by the variable optical attenuator.

Preferably, the monitoring means are adapted to detect the power level of the first optical signal and, in case the detected power level of the first optical signal is smaller than the working value, to control therefrom the variable optical attenuator in order to set the power level of the second optical signal to the non-working value; the monitoring means are further adapted to detect the power level of the second optical signal and, in case the detected power level of the second optical signal is greater or equal to another working value, to control therefrom the variable optical attenuator in order to set the power level of the second optical signal to the pre-defined value.

Preferably, the monitoring mean is integrated in the variable optical attenuator.

According to a second aspect, the present invention provides a telecommunications network including a network element according to the first aspect.

### BRIEF DESCRIPTION OF THE DRAWINGS

Fig.1 schematically shows an optical Add-Drop Multiplexer according to the prior art.
Fig.2 schematically shows an optical Add-Drop Multiplexer according to the invention.

### BEST MODE FOR CARRYING OUT THE INVENTION

Referring to Fig.2, it shows an OADM according to the invention, wherein two network connections are carryed over wavelengths λ1 and λ2 respectively: this is shown with λ1 and λ2 over the input fibre (fin) and the output fibre (fout) and also with λ1 over the first output of the demultiplexer (DEMUX) and with λ2 over the second output of the demultiplexer (DEMUX). The switching means are implemented through optical fibres patchcords. The first switching means output carrying λ1 is connected to the the local port through a first patchcord and the second switching means output carrying λ2 is connected to the output of the second splitter SPL2 through a second patchcord. Moreover, VOA1 and VOA2 receive an optical signal over λ1 and λ2 respectively and generate therefrom an optical signal according to a pre-defined value (for example, -3 dBm): this is indicated in Fig.2 with an arrow over VOA1 and VOA2 having a top-right direction.

On the contrary, wavelength λ3 is not carrying any network connection (which is also indicated with "unused" wavelength): again, this is shown with "--" both over the input fibre (fin) and the output fibre (fout) and also over the third output of demultiplexer (DEMUX).

According to the invention, the third output of the switching means is connected to an input of the switching means, although no network connection is carried over the wavelength λ3, which is unused; this switching means input can be connected to a splitter output (like shown in Fig.2 for splitter SPL3) or can also be connected to an add port. Moreover, the OADM includes monitoring means and VOA3 includes a control input driven by the monitoring means: this is shown in Fig.2 with an arrow from the VOA3 input to a control input of the VOA3. The monitoring means detect that the third output of the switching means is not carrying any network connection, for example by detecting that the power level of the optical signal at the third output is smaller than a threshold, and control the VOA3 (through the VOA3 control input) connected to the third output such that VOA3 sets the power level of the VOA3 output to the maximum attenuation value (for example, -25 dBm): this is shown in Fig.2 with an arrow over VOA3 having a bottom-right direction.

Therefore according to the invention, the VOA3 has 2 working modes:
- the first is the equalization mode, wherein a network connection is carryed over wavelength λ3 at the VOA3 input and the power level of the VOA3 output is set to a pre-defined value: this equalization mode is known according to the prior art;
- the second is a shutter mode, wherein no network connection is carryed over wavelength λ3 at the VOA3 input and the power level of the VOA3 output is set to the maximum attenuation value: this shutter mode is new according the invention.

According to the shutter mode, VOA3 sets the power level of the VOA3 output to the maximum attenuation value: this has the advantage to block the optical noise carryed over the unused wavelength λ3. In fact, λ3 is carrying only optical noise. If the optical noise carryed over λ3 is not blocked, this optical noise is received by the output optical amplifier (OAout), which amplifies both the optical signal over λ1 and λ2 and the optical noise over λ3: the amplification of the optical noise over λ3 can degrade the performance of the output optical amplifier over the other wavelengths λ1 and λ2, expecially in case of a ring network, wherein the optical noise can travel again in the ring and can be further amplified.

In case of adding a new network connection over wavelength λ3, the intermediate OADMs (like the one shown in Fig.2) have the advantage not to require any configuration of the switching means, because the cross-connection for λ3 inside the switching matrix has already been configured (during the deployment of the network or during the manifacture of the OADM). Moreover, the monitoring means automatically detect that a connection has been added over wavelength λ3, for example detecting that the power level of the optical signal at the third output of the switching means is greater or equal than the threshold, and VOA3 automatically changes the working mode from the shutter mode to the equalization mode.

Fig.2 shows that the third output of the switching means is connected to an input of the switching means, which is further connected to the output of the third splitter SPL3: this is indicated as a cross-connection in through (or pass-through) mode, that is the switching means does not change the wavelength (in this example, wavelength λ3) when performing the cross-connection between an input and an output. Therefore a connection is carryed in the telecommunications network over the same wavelength, because this is not changed by the switching means in the OADM of the telecommunications network.

In case of a switching matrix including 8 inputs connected to 8 splitters outputs respectively, the cross-connection in through mode includes the cross-connection of the first input to the first output, of the second input to the second output, ... till the cross-connection of the eighth input to the eighth output; in this example, in case of configuring 8 connections in the network, the first connection is carryed over wavelength λ1, the second connection is carryed over wavelength λ2, ... till the eighth connection which is carryed over wavelength λ8.

In general, according to the invention the switching means include cross-connections configured also for the unused wavelenghts (that is, the wavelenghts which are not carrying any network connections), but the through mode cross-connection is not essential for performing the invention, for example in case a network connection is carryed according to wavelength interchange, that is in case a connection is received at the OADM over a wavelength and it's transmitted over another different wavelength. In this case, the switching means include pre-defined cross-connections according to any order, like for example first input connected to fifth output, second input connected to third output, third input connected to second output, ... In this case, a network management station responsible for the configuration of the network connections stores the information about the wavelength interchange performed in the switching means of the OADMs crossed by the network connections.

The invention is expecially useful in case of switching means implemented through patchcords, because no manual intervention of the network operator is required when adding a new connection and because patchcords are cheap.

Anyway, the invention is also useful in case of switching means implemented through an optical switching matrix, for example in case the optical switching matrix includes an high number of inputs and outputs, because a lot of cross-connections have already been configured in the switching means and the network operator can save time and effort for the remote configuration.

The monitoring mean can detect the power level of the optical signal at the input of the variable optical attenuator VOA3 smaller than a threshold (that is, detecting the power level of the third output of the switching means), like explained above.

Alternatevely, the monitoring mean can detect the power level of the optical signal at the output of the variable optical attenuator VOA3 smaller than another threshold.

Preferably, the OADM includes monitoring means adapted to detect the power level of the optical signal at the input of the variable optical attenuator VOA3 smaller than a threshold and adapted to detect the power level of the optical signal at the output of the variable optical attenuator VOA3 greater (or equal) than another threshold . This has the advantage to provide a simplified detection in the shutter mode because, in case of switching of the working mode of VOA3 from the shutter mode to the equalization mode, the monitoring means detecting the power level at the VOA3 input does not need to take into account the high value of the attenuation set by the VOA3 in the shutter mode. Preferably, the OADM includes two different monitoring means for the variable optical attenuator VOA3 (and in general, for each variable optical attenuator), one for detecting the power level at the input of the variable optical attenuator VOA3 smaller than a threshold and the other for detecting the power level at the output of the variable optical attenuator VOA3 equal or greater than the other threshold.

Preferably, the OADM includes monitoring means adapted to detect the power level of the optical signal at the output of the variable optical attenuator VOA3 both smaller than the threshold and greater (or equal) than the threshold. This solution has the advantage to require only one monitoring means for VOA3 (and, more in general, for each variable optical attenuator) and the advantage that the monitoring mean includes only one input.

Preferably, the OADM includes monitoring means adapted to detect the power level of the optical signal at the input of the variable optical attenuator VOA3 both smaller than a threshold and greater (or equal) than the threshold. This solution has the advantage to require only one monitoring means for VOA3 (and, more in general, for each variable optical attenuator) and the advantage that the monitoring mean includes only one input.

Similar considerations apply to the Variable Optical Attenuators VOA1 and VOA2 and, more in general, to all the Variable Optical Attenuators included in an OADM; therefore an OADM includes means for monitoring the VOA output of each VOA included in the OADM or for monitoring the VOA input of each VOA included in the OADM or for monitoring the VOA input and output of each VOA included in the OADM (or a combination of these monitoring means).

## Claims

1. Network element including:
- switching means including a plurality of inputs for receiving a first plurality of optical signals and including a plurality of outputs for generating a second plurality of optical signals;
- a variable optical attenuator (VOA3) including an input connected to an output out of the plurality of switching means outputs for receiving a first optical signal out of the second plurality of optical signals and including an output for generating a second optical signal;
**characterized in that** an input out of the plurality of switching means inputs is connected to said switching means output,
and **in that** the network element includes monitoring means adapted to detect the power level of the first optical signal at the variable optical attenuator input connected to said switching means output or to detect the power level of the second optical signal at the variable optical attenuator output and, in case the detected power level is smaller than a working value, the monitoring means are adapted to control therefrom the variable optical attenuator in order to set the power level of the second optical signal to a non-working value.

2. Network element according to claim 1, wherein, in case the detected power level is greater or equal to the working value, the monitoring means are further adapted to control therefrom the variable optical attenuator in order to set the power level of the second optical signal to a pre-defined value.

3. Network element according to claim 1 or 2, wherein the switching means input is connected in pass-through mode with the switching means output.

4. Network element according to any of the previous claims, wherein the switching means are optical fibre patchcords.

5. Network element according to any of claims 1 to 3, wherein the switching means are an optical switching matrix.

6. Network element according to any of the previous claims, wherein the non-working value is substantially a maximum attenuation value set by the variable optical attenuator.

7. Network element according to claim 1 and to any of claims 3 to 6, wherein the monitoring means are adapted to detect the power level of the first optical signal and, in case the detected power level of the first optical signal is smaller than the working value, to control therefrom the variable optical attenuator in order to set the power level of the second optical signal to the non-working value, and wherein the monitoring means are further adapted to detect the power level of the second optical signal and, in case the detected power level of the second optical signal is greater or equal to another working value, to control therefrom the variable optical attenuator in order to set the power level of the second optical signal to the pre-defined value.

8. Network element according to any of the previous claims, wherein the monitoring mean is integrated in the variable optical attenuator.

9. Telecommunication network including at least one network element according to any of claims 1 to 8.

## Amended claims

### Amended claims in accordance with Rule 137(2) EPC.

**1.** Network element including:
- switching means (SW) including a plurality of switching means inputs (SWI1, SWI2, SWI3) for receiving a first plurality of optical signals and including a plurality of switching means outputs (SWO1, SWO2, SWO3) for generating a second plurality of optical signals;
- a plurality of optical fibre patchcords (P1, P2, P3), each optical fibre patchcord (P1, P2, P3) connecting an input (SWI3) of said plurality of switching means inputs (SWI1, SWI2, SWI3) to a respective output (SWO3) of said plurality of switching means outputs (SWO1, SWO2, SWO3); and
- a variable optical attenuator (VOA3) including a variable optical attenuator input (VOA31) and including a variable optical attenuator output (VOA30);
**characterized in that** said network element includes monitoring means (MM) adapted to detect the signal power level at the variable optical attenuator input (\/OA3I) connected to said switching means output (SWO3) or to detect the signal power level at the variable optical attenuator output (VOA3O) and, in case the detected power level is smaller than a working value, the monitoring means (MM) are adapted to control therefrom the variable optical attenuator in order to set the power level of the optical signal at the variable optical attenuator output (VOA30) to a non-working value.

**2.** Network element according to claim 1, wherein, in case the detected power level is greater or equal to the working value, the monitoring means (MM) are further adapted to control therefrom the variable optical attenuator (VOA3) in order to set the power level of the optical signal at the variable optical attenuator output (VOA3O) to a pre-defined value.

**3.** Network element according to claim 1 or 2, wherein the switching means input (SWI3) is connected in pass-through mode with the switching means output (SWO3).

**4.** Network element according to any of the previous claims, wherein the non-working value is substantially a maximum attenuation value set by the variable optical attenuator (VOA3).

**5.** Network element according to claim 1 and claim 3 or 4, wherein the monitoring means (MM) are adapted to detect the signal power level at the variable optical attenuator input (VOA3I) and, in case the detected power level of the optical signal is smaller than the working value, to control therefrom the variable optical attenuator (VOA3) in order to set the signal power level at the variable optical attenuator output (VOA3O) to the non-working value, and wherein the monitoring means (MM) are further adapted to detect the signal power level at the variable optical attenuator output (VOA3O) and, in case the detected power level of the optical signal is greater or equal to another working value, to control therefrom the variable optical attenuator (VOA3) in order to set the power level of the optical signal at the variable optical attenuator output (VOA3O) to the pre-defined value.

**6.** Network element according to any of the previous claims, wherein the monitoring mean (MM) is integrated in the variable optical attenuator (VOA3).

**7.** Telecommunication network including at least one network element according to any of claims 1 to 6.
